# EUROPÄISCHE PATENTSCHRIFT

(11) **EP 0 824 377 B1**
(45) Veröffentlichungstag und Bekanntmachung des Hinweises auf die Patenterteilung: **19.04.2000**
(21) Anmeldenummer: 96919714.4
(22) Anmeldetag: 08.05.1996
(51) Int. Cl.: B03C 3/82, B03C 3/32, B03C 3/06, B03C 3/019, F24F 3/16

(54) **LUFTREINIGUNGSGERÄT**
AIR PURIFIER
APPAREIL PURIFICATEUR D'AIR

(30) Priorität: 08.05.1995 DE 29507629 U; 22.08.1995 DE 19530785
(43) Veröffentlichungstag der Anmeldung: 25.02.1998
(73) Patentinhaber: Gutmann, Rudolf, 75417 Mühlacker (DE)
(72) Erfinder: Gutmann, Rudolf, 75417 Mühlacker (DE)
(74) Vertreter: Leitner, Waldemar, Dr. techn.
(86) Internationale Anmeldenummer: EP9601927
(87) Internationale Veröffentlichungsnummer: WO9635513

(56) Entgegenhaltungen:
- WO-A-86/03141
- DE-A- 2 035 789
- DE-A- 2 132 410
- US-A- 3 623 295

## Beschreibung

Die Erfindung betrifft ein Luftreinigungsgerät, insbesondere ein elektrostatisches Luftreinigungsgerät, das ein Gehäuse aufweist, in dem eine Einströmdüse und eine Austrittsdüse für einen zu reinigenden Luftstrom vorgesehen sind, der einer im Gehäuse angeordneten Luftreinigungseinheit zugeführt wird, daß das Gehäuse des Luftreinigungsgeräts säulenartig ausgebildet ist, daß die im säulenartig ausgebildeten Gehäuse aufgenommene Luftreinigungseinheit rohrförmig ausgebildet ist, daß das säulenartig ausgebildete Gehäuse eine im wesentlichen luftdicht geschlossene Mantelfläche aufweist, daß die Einströmdüse für den zu reinigenden Luftstrom an einer ersten Stirnfläche des säulenartig ausgebildeten Gehäuses angeordnet ist.

Ein derartiges Luftreinigungsgerät für Raumlauft ist aus der DE-OS 2 132 410 bekannt. Hierbei ist vorgesehen, daß die Austrittsdüse in der Mantelfläche des Gehäuses des bekannten Luftreinigungsgeräts angeordnet ist. Eine derartige Ausgestaltung bewirkt, daß in nachteiliger Art und Weise kein geradliniger Strömungsverlauf des das bekannte Luftreiniungsgerät durchsetzenden Luftstroms gegeben ist, so daß in nachteiliger Art und Weise Turbulenzen im Strömungsverlauf auftreten, die sich in einer bei Luftreinigungsgeräten für Raumluft äußerst nachteiligen Geräuschentwicklung niederschlagen.

Ein weiterer Nachteil der in der Mantelfläche angeordneten Austrittsdüsen des bekannten Luftreinigungsgeräts besteht darin, daß hierdurch die aus dem bekannten Luftreinigungsgerät ausströmende, gereinigte Luft nicht weit genug vom Luftreinigungsgerät weggeführt wird, so daß in nachteiliger Art und Weise ein Großteil der gereinigten Luft wiederum durch die Eintrittsdüse angesaugt und erneut der Luftreinigungseinheit des bekannten Luftreinigungsgeräts geführt wird.

Ein weiterer Nachteil des bekannten Luftreinigungsgeräts besteht darin, daß die Einströmöffnung der Luftreinigungseinheit einen viel geringeren Durchmesser als die Eintrittsdüse des säulenartigen Gehäuses aufweist, so daß hierbei eine Verringerung des Strömungsquerschnitts im bekannten Luftreinigungsgerät auftritt. Dies bewirkt in nachteiliger Art und Weise Turbulenzen im Raum vor der Luftreinigungseinheit, die zu einer Verschlechterung der Strömungseigenschaften in der Luftreinigungseinheit des bekannten Luftreinigungsgeräts und somit zu einer Verschlechterung von deren Reinigungsleistung führen.

Diese unterschiedliche Durchmesser von Eintrittsdüse des säulenartigen Gehäuses und Eintrittsöffnung der Luftreinigungseinheit besitzt desweiteren den Nachtei, daß im bekannten Luftreinigungsgerät ein Sperrelement für den Luftstrom vorgesehen sein muß, welches verhindert, daß ein Teil der durch die Eintrittsöffnung des bekannten Luftreinigungsgeräts eintretenden Luftströmung an der Luftreinigungseinheit vorbeilaufen kann. Eine derartige Sperrbarriere ist in strömungstechnischer Hinsicht ebenfalls ungünstig, da es zu einer weiteren Verwirbelung des Luftstroms und somit zu einer Verminderung der Reinigungsleistung und einer Erhöhung der Geräuschentwicklung führt.

Aus der DE-OS 2 035 789 ist ein kastenartig aufgebautes Luftreinigungsgerät mit einer elektrostatischen Abscheideeinrichtung ist bekannt. Die zu reinigende Luft wird in einem Gasionisator in einem Hochspannungsfeld ionisiert, so daß im nachfolgenden Abscheider, wo ebenfalls ein Hochspannungsfeld besteht, sich die in der Luft befindlichen Schwebeteilchen sicher an einer Abscheidefläche im Abscheider anlegen. Der bekannte elektrostatische Abscheider ist in einem kastenartigen Gehäuse mit zylindrischem Querschnitt untergebracht, welches einen deutlich größeren Durchmesser besitzt als der im Gerät befindliche Gasionisator.

Die eben beschriebene elektrostatische Abscheideeinrichtung sowie alle anderen bekannten Luftreinigungsgeräte sind aufgrund ihres kastenförmigen Gehäuses nur in der Lage, die unteren Luftschichten eines Raumes zu reinigen, so daß eine Reinigung der oberen Luftschichten nicht oder nur äußerst unzureichend erfolgt.

Die bekannten Luftreinigungsgeräte können nur eine relativ geringe Luftmenge pro Stunde reinigen. Dies ist dadurch bedingt, daß die in Wohnräumen, in Geschäftsräumen oder in Gaststätten eingesetzten bekannten Luftreinigungsgeräte relativ kompakt gebaut sein müssen, da die meisten Käufer derartiger Luftreinigungsgeräte es als störend empfinden, wenn, z. B. in ihrem Wohnzimmer, ein klobiger Kasten stehen würde, welcher bei den den bekannten Luftreinigungsgeräten erforderlich wäre, um in einem derartigen Gehäuse die zur Erzielung einer adäquaten Reinigungsleistung erforderlichen technischen Komponenten unterzubringen.

Bedingt durch die bodennahe Aufstellung der bekannten Luftreinigungsgeräte ist die bei diesen einsetzbare Leistung eines die Luft ansaugenden Ventilators relativ gering dimensioniert, da ansonsten die in dem Raum befindlichen Personen einer unangenehmen Zugluft ausgesetzt sein würden.

Aufgrund der aus obigen Gründen erforderlichen kompakten Bauweise der bekannten Luftreinigungsgeräte ist nur eine äußerst geringe Schalldämmung verwendbar, welche daher nur einen geringen Pegel von Betriebsgeräuschen der bekannten Luftreinigungsgeräte dämpfen kann. Dies führt wiederum zu einer nur geringen Leistung der bekannten Luftreinigungsgeräte.

Aus der DE-OS 35 28 591 ist ein säulenartig ausgebildetes Klimagerät bekannt, bei dem das Gehäuse eine im wesentlichen luftdicht geschlossene Mantelfläche aufweist und eine Ein- und Austrittsöffnung vorhanden ist. Das Klimagerät besteht aus einem Gebläse mit druckseitig angeordnetem lonengenerator und einem zuströmseitig vom lonengenerator angeordneten elektrischen Staubabscheider. Nachteilig an dem bekannten Klimagerät ist, daß es nur in seiner horizontalen Richtung aufgestellt werden kann, so daß auch bei diesem bekannten Gerät die vorstehend beschriebenen Nachteile weiterhin auftreten.

Aus der DE-OS 39 21 387 ist ein Luftreiniger bekannt, der kastenförmig aufgebaut ist und an seiner einen Seitenfläche Lufteinlaßöffnungen aufweist. Der durch diese Lufteinlaßöffnung angesaugte Luftstrom durchströmt eine Vorrichtung zum elektrischen Abscheiden, welche von der Koronaentladung Gebrauch macht.

Aus der JP 60-114 361 in Patents Abstracts of Japan, Sekt. C, Vol.9 (1985), Nr. 260 (C309) ist ein Luftreinigungsgerät bekannt, daß an seinen beiden Seitenflächen Lufteinlaß- und Luftauslaßöffnungen aufweist, wobei der durch die Einlaßöffnung eintretende Luftstrom eine elektrostatische Reinigungsvorrichtung durchquert.

Aus der WO 8/03141 ist ein Luftreinigungsgerät bekannt, welches dazu dient, die Emissionsprodukte eines holzverbrennenden Ofens zu behandeln. Die Anforderungen, die ein derartiges Luftreinigungsgerät zu erfüllen hat, um seiner Funktion gerecht zu werden, sind grundsätzlich nicht mit denen zu vergleichen, die ein Luftreinigungsgerät für Raumluft, welches für einen Einsatz in Wohnräumen konzipiert ist, erfüllen muß, zu vergleichen. Während bei Luftreinigungsgeräten für Raumluft geräuscharm, keine Zugluft verursachend und ästethisch ansprechend ausgeführt sein müssen, spielen diese Eigenschaften bei einem in einem Abgasreinigungssystem eingesetzten Luftreinigungsgerät - wie dem aus der oben genannten Druckschrift bekannten - keine Rolle. Desweiteren ist bei dem bekannten Luftreinigungsgerät vorgesehen, daß die vom Verbrennungsofen erzeugte Emissionsprodukte über eine Rohrleitung einer vertikalen angeordneten Luftreinigungseinheit zugeführt werden. Um die von der Luftreinigungseinheit herausgefilterten, kondensierten Emissionsprodukte leicht entsorgen zu können, ist bei dem bekannten Luftreinigungsgerät vorgesehen, daß zwischen der Eintrittsdüse des Luftreinigungsgeräts und dem einen kleineren Durchmesser aufweisenden Ende der Rohrleitung Auffangelemente angeordnet sind, die in strömungstechnischer Hinsicht äußerst ungünstig sind. Eine derartige Verengung des Strömungswegs des zu reinigenden Luftstroms durch Auffangelemente führt zwangsläufig zu Turbulenzen, die sich in einem abnehmenden Wirkungsgrad sowie in einer - für in Wohnräumen einzusetzende Luftreinigungsgeräte für Raumluft nicht akzeptablen - Geräuschentwicklung manifestieren.

Die US-PS 3 623 295 beschreibt ein Abgasreinigungssystem, welches vorzugsweise für den Einsatz bei Automobilen konzipiert ist. Dieses weist eine Luftreinigungseinheit auf, die in einem Rohr angeordnet ist. Ein Ende des Rohres ist mit einem Auspufftopf eines Kraftfahrzeuges verbunden, so daß die aus dem Motor des Kraftfahrzeuges ausströmenden Emissionsprodukte in dem Auspufftopf bereits gekühlt sowie hinsichtlich ihres Drucks reduziert werden. Ein derartiges System ist nicht für einen Einsatz als Luftreinigungsgerät für Raumluft geeignet, da es nicht in der Lage ist, die bei diesen Luftreinigungsgeräten vorzusehenden, vorstehend beschriebenden Eigenschaften zu erfüllen.

Es ist daher Aufgabe der Erfindung, ein Luftreinigungsgerät für Raumluft der eingangs genannten Art derart weiterzubilden, daß trotz eines kompakten Aufbaus eine hohe Reinigungsleistung erreichbar ist.

Diese Aufgabe wird erfindungsgemäß dadurch gelöst, daß die Austrittsdüse an der anderen Stirnfläche des säulenartig ausgebildeten Gehäuses angeordnet ist, daß eine Eintrittsöffnung der Luftreinigungseinheit an einer ihrer Stirnflächen und fluchtend mit der Einströmdüse des säulenartig ausgebildeten Gehäuses und eine Austrittsöffnung der Luftreinigungseinheit an ihrer anderen Stirnfläche und fluchtend mit der Austrittsdüse des säulenartig ausgebildeten Gehäuses der Luftreinigungsgeräts derart angeordnet sind, daß ein im wesentlichen geradliniger Verlauf des Luftstroms zwischen der Einstromdüse des Luftreinigungsgeräts und der Eintrittsöffnung sowie der Austrittsöffnung und der Austrittsdüse des säulenartig ausgebildeten Luftreinigungsgeräts erzeugbar ist.

Vorteilhafte Ausgestaltungen der Erfindung sind den Unteransprüchen zu entnehmen.

Durch die erfindungsgemäßen Maßnahmen wird in besonders vorteilhafter Art und Weise ein Luftreinigungsgerät ausgebildet, welches sich durch seinen besonders geräuscharmen Betrieb und seine optisch ansprechende Form auszeichnet. Der durch die erfinäungsgemäße Ausbildung des Luftreinigungsgerätes in vorteilhafter Art und Weise erzielbare geradlinige Strömungsverlauf des das erfindungsgemäße Luftreinigungsgerät durchsetzenden Luftstroms eliminiert oder reduziert das Auftreten von Turbulenzen im Strömungsverlauf. Dies bewirkt in vorteilhafter Art und Weise, daß die Luftgeräusche beim Betrieb des erfindungsgemäßen Luftreinigungsgerätes nur minimal sind. Desweiteren besitzt die durch die Säulenform des erfindungsgemäßen Luftreinigungsgerätes ermöglichte geradlinige Luftführung, daß das erfindungsgemäße Luftreinigungsgerät dem durchsetzenden Luftstrom nur einen äußerst geringen Strömungswiderstand entgegensetzt, so daß in vorteilhafter Art und Weise eine geringere Ventilatorleistung als bei den bekannten Luftreinigungsgeräten erforderlich ist, um einen definierten Luftdurchsatz zu erzielen. Diese geringere Ventilatorleistung trägt ebenfalls zur Geräuscharmut des erfindungsgemäßen Luftreinigungsgerätes bei, wobei der Geräuschpegel des erfindungsgemäßen Luftreinigungsgerätes typischerweise im Bereich von unter 30 dBA liegt.

Ein weiterer Vorteil des erfindungsgemäßen Luftreinigungsgerätes besteht darin, daß die säulenförmige Ausgestaltung des Gehäuses dazu führt, daß das erfindungsgemäße Luftreinigungsgerät nicht a!s störender Fremdkörper im Raum, sondern vielmehr als repräsentatives Dekorationselement empfunden wird. Die erfindungsgemäß vorgesehene geschlossene Ausgestaltung der Mantelflächen erlaubt es in vorteilhafter Art und Weise, daß das erfindungsgemäße Luftreinigungsgerät mit unterschiedlichen Gestaltungselementen, wie z. B. einem Foliendekor, einem Echtholzdekor oder eine Pulverbeschichtung versehen werden kann, so daß es in vorteilhafter Art und Weise besonders einfach an das Ambiente des Aufstellungsorts angepaßt werden kann.

Die Säulenform des erfindungsgemäßen Luftreinigungsgeräts besitzt desweiteren den Vorteil, daß das Luftreinigungsgerät besonders einfach verlängert werden kann, ohne optisch störend oder klobig zu wirken. Durch die leicht durchführbare Verlängerung des Gehäuses ist es besonders einfach möglich, eine längere Luftreinigungseinheit zu verwenden, wodurch in besonders vorteilhafter Art und Weise ein erhöhter Reinigungsgrad erzielbar ist Desweiteren erlaubt es die erfindungsgemäße Säulenform des Luft-reinigungsgeräts, eine elektrostatische Luftreinigungseinheit zu verwenden, welche eine geringere Hochspannung zur Ionisation der Schmutzpartikel erfordert als dies bei den bekannten Luftreinigungsgeräten der Fall ist. Dies besitzt den Vorteil, daß das erfindungsgemäße Luftreinigungsgerät deutlich weniger Ozon freisetzt als die bekannten Luftreinigunsgeräte.

Eine vorteilhafte Weiterbildung der Erfindung sieht vor, daß das erfindungsgemäße Luftreinigungsgerät als Standgerät ausgebildet ist, wobei die Einströmdüse am oberen Ende und die Auslaßdüse am unteren Ende des erfindungsgemäßen Luftreinigungsgerätes angeordnet ist. Eine derartige Maßnahme besitzt den Vorteil, daß es das erfindungsgemäße Luftreinigungsgerät in vorteilhafter Art und Weise erlaubt, auch Luft aus den oberen Bereichen eines Raumes anzusaugen.

Desweiteren besitzt die vorstehend beschriebene Anordnung den Vorteil, daß hierdurch die sich im oberen Bereich des Raumes ansammelnde warme Luft nach unten transportiert wird und nach dem Durchlaufen des erfindungsgemäßen Luftreinigungsgeräts und ihrem Austritt aus der unteren Düse wieder nach oben steigt. Die hierdurch ausgebildete Gegenströmung bewirkt, daß die Sinkgeschwindigkeit von in der Raumluft befindlichen Partikeln vermindert wird, so daß auch schwere Partikel einfach und zuverlässig erfaßt werden können.

Eine weitere vorteilhafte Weiterbildung der Erfindung sieht vor, daß der die Einströmdüse umgebende Rand des Luftreinigungsgeräts abgerundet ausgeführt ist. Diese Maßnahme besitzt den Vorteil, daß die Strömungsverhältnisse im Bereich der Einströmdüse verbessert werden.

Eine weitere vorteilhafte Weiterbildung der Erfindung sieht vor, daß die Eintrittsöffnung der Luftreinigungseinheit des erfindungsgemäßen Luftreinigungsgerätes von der Einströmdüse des Gehäuses beabstandet im Inneren des säulenförmigen Gehäuses des Luftreinigungsgerätes angeordnet ist. Eine derartige Maßnahme besitzt den Vorteil, daß in dem hierdurch entstehenden Freiraum zwischen der Einströmdüse des säulenförmigen Gehäuses und der Eintrittsöffnung ein Strömungsleitelement anortbar ist, welches von außen nicht sichtbar ist und derart den vorteilhaften ästhetischen Eindruck des erfindungsgemäßen Luftreinigungsgeräts nicht beeinträchtigt.

Eine weiterer vorteilhafte Weiterbildung der Erfindung sieht vor, daß in dem Freiraum zwischen der Einströmdüse des säulenförmigen Gehäuses und der Eintrittsöffnung ein Lichtelement angeordnet ist. Dies besitzt den Vorteil, daß das erfindungsgemäße Luftreinigungsgerät neben seiner Reinigungsfunktion auch noch als Raumbeleuchtung eingesetzt werden kann.

Ein Ausführungsbeispiel der Erfindung ist in der Zeichnung dargestellt und wird nachstehend näher erläutert. Es zeigen:
- Figur 1: ein erstes Ausführungsbeispiel eines Luftreinigungsgeräts,
- Figur 2: ein zweites Ausführungsbeispiel eines Luftreinigungsgeräts,
- Figur 3: ein drittes Ausführungsbeispiel eines Luftreinigungsgeräts,
und
- Figur 4: ein Gehäusesegment des Luftreinigungsgerätes

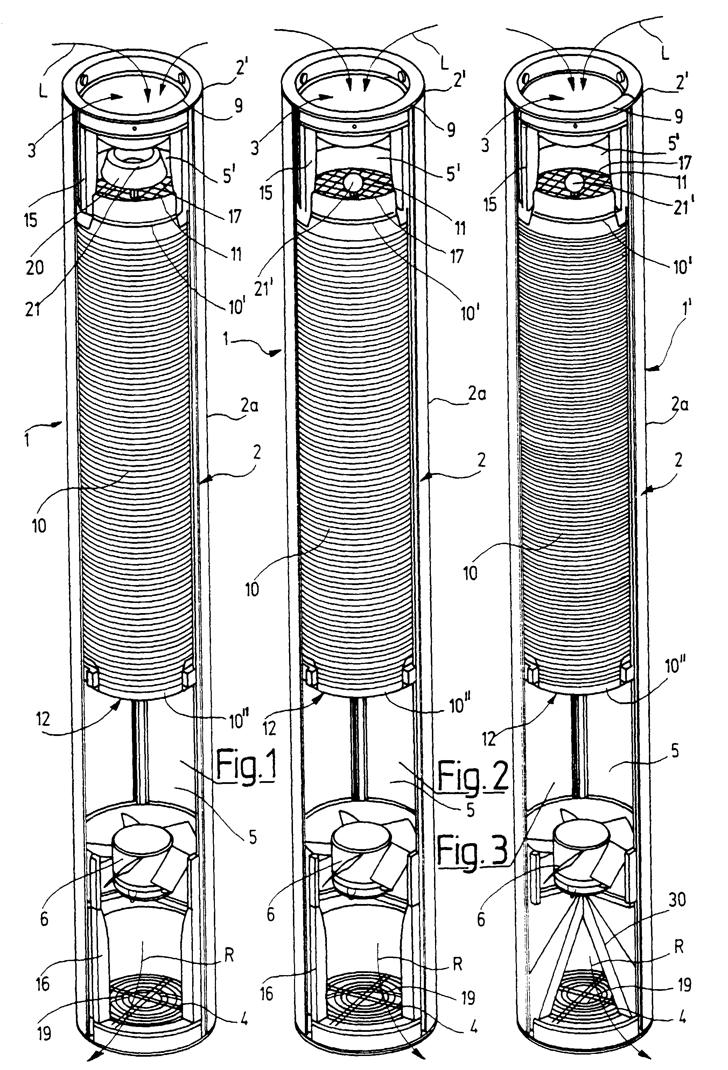

Das in Figur 1 dargestellte erste Ausführungsbeispiel eines allgemein mit 1 bezeichneten Luftreinigungsgeräts weist ein säulenartig ausgebildetes Gehäuse 2 mit einem runden, ovalen oder polygonalen Querschnitt auf, welches eine im wesentlichen luftdicht geschlossene Mantelfläche 2a aufweist.

Das Gehäuse 2 kann auf einem Ständer angebracht, insbesondere aufsetzbar, sein, oder Halteelemente aufweisen, durch die das Gehäuse 2 des Luftreinigungsgeräts 1 an einer Wand und/oder einer Decke eines Raumes, insbesondere eines Wohnraumes, befestigbar ist.

An einer ersten Stirnseite 2' des säulenartigen Gehäuses 2 ist eine Einströmdüse 3 angeordnet, durch die ein zu reinigender Luftstrom L von der Umgebung des Luftreinigungsgeräts 1 angesaugt wird. In Strömungsrichtung des angesaugten Luftstroms L gesehen folgt der Einströmdüse 3 eine vorzugsweise beabstandet von dieser angeordnete elektrostatische Luftreinigungseinheit 10, die ebenfalls säulenartig oder rohrförmig ausgebildet ist. Eine Eintrittsöffnung 11 ist an einer ersten Stirnseite 10' der elektrostatischen Luftreinigungseinheit 10 und fluchtend mit der Einströmdüse 3 des säulenartigen Gehäuses 2 des Luftreinigungsgeräts 1 angeordnet, so daß der über die Einströmdüse 3 angesaugte Luftstrom L im wesentlichen turbulenzfrei und daher besonders geräuscharm in die elektrostatische Luftreinigungseinheit 10 ,deren genauer Aufbau für das Verständnis der nachfolgenden Beschreibung ohne Bedeutung ist, eintreten kann.

Nachdem der Luftstrom L die elektrostatische Luftreinigungseinheit 10 durchlaufen hat, tritt der derart gereinigte Luftstrom aus einer in einer zweiten Stirnfläche 10" der Luftreinigungseinheit 10 angeordneten Austrittsöffnung 12 der Luftreinigungseinheit 10 aus. In vorteilhafter Art und Weise ist die Austrittsöffnung 12 der säulenartig ausgebildeten Luftreinigungseinheit 10 fluchtend mit der Austrittsdüse 4 des säulenartigen Gehäuses 2 der Luftreinigungseinheit 1 angeordnet, so daß auch hier ein im wesentlichen geradliniger Verlauf der Luftströmung gegeben ist. In dem zwischen der Austrittsöffnung 12 der säulenartigen Luftreinigungseinheit 10 und der Austrittsdüse 4 liegenden Raum 5 des säulenartigen Gehäuses 2 ist eine als Radial- oder Axialgebläse ausgebildete Ventilatoreinheit 6 angeordnet, die für die o.g. Strömungsbewegung des zu reinigenden Luftstroms L verantwortlich ist.

Der obenstehend beschriebene Grundaufbau des Luftreinigungsgeräts 1 zeichnet sich bereits durch seine hohe Geräuscharmut aus, da der die Luftreinigungssäule durchsetzende Luftstrom L aufgrund seiner im wesentlichen geradlinigen Führung strömungsdynamisch günstig, weitgehend turbulenzfrei geführt wird und daher nur äußerst wenige Luftgeräusche verursacht. Durch den dadurch hervorgerufenen geringen Strömungswiderstand des Luftreinigungsgeräts 1 ist in vorteilhafter Art und Weise eine Ventilatoreinheit 6 mit einer geringeren Leistung ausreichend, als dies bei bekannten Luftreinigungsgeräten zur Ansaugung der gleichen Luftmenge erforderlich ist. Bei einer praktischen Umsetzung der beschriebenen Ausbildung wurde bei einer 1,4 m langen und einem Radius von 8,5 cm aufweisenden zylindrischen Säule ein Geräuschpegel gemessen, der unter 30 dBA liegt.

Die säulenartige Ausgestaltung des Luftreinigungsgeräts 1 erlaubt es in besonders vorteilhafter Art und Weise, besonders einfach Schalldämmungselemente 15, 16 anzuordnen, die eine weitere Verringerung des durch den Betrieb des beschriebenen Luftreinigungsgeräts 1 auftretenden Geräuschpegels bewirken. Das im Zwischenraum 5' zwischen der Einströmdüse 3 des Gehäuses 2 und der Eintrittsöffnung 11 der Luftreinigungseinheit 10 angeordnete erste Schalldämmungselement 15 bewirkt in vorteilhafter Art und Weise eine Dämpfung der Strömungsgeräusche des in die Luftreinigungssäule eintretenden Luftstroms L sowie der Betriebsgeräusche der elektrostatischen Luftreinigungseinheit 10. In entsprechender Art und Weise dämmt das im unteren Bereich 5 des säulenartigen Gehäuses 2 zwischen der Ventilatoreinheit 6 und der Austrittsdüse 4 angeordnete zweite Schalldämmungselement 16 die Strömungsgeräusche eines aus dem Luftreinigungsgerät 1 austretenden, gereinigten Luftstroms R sowie der Betriebsgeräusche der Ventilatoreinheit 6 und der elektrostatischen Luftreinigungseinheit 10.

Eine weitere Verbesserung der Eigenschaften des beschriebenen Luftreinigungsgeräts 1 wird erreicht, wenn die die Einströmdüse 3 umgebende Randfläche 9 des Gehäuses 2 abgerundet ausgeführt ist. Diese Maßnahme bewirkt in vorteilhafter Art und Weise nicht nur, daß ein strömungstechnisch günstiger Verlauf der in die Einströmdüse 3 eintretenden Luftströmung L erreicht wird. Vielmehr bewirkt diese Ausgestaltung auch, daß in der unmittelbaren Umgebung des Luftreinigungsgeräts 1 Luft nicht nur aus dem über der Einströmdüse 3 liegenden Bereich, sondern auch aus einem einige Dezimeter unter der Einströmdüse 3 liegenden Umgebungsbereich angesaugt wird.

In dem unterhalb der Eintrittsdüse 3 liegenden Raum 5' ist vorzugsweise ein Strömungsleitelement 20 angeordnet, welches in vorteilhafter Art und Weise eine Erhöhung der Strömungsgeschwindigkeit des Luftstroms L in diesem Bereich bewirkt und damit verhindert, daß sich Schmutzpartikel an der Innenwand des Gehäuses 2 vor der Luftreinigungseinheit 10 absetzen. Besonders vorteilhaft ist es hierbei, daß das Strömungsleitelement 20 mit einem Beleuchtungselement 21 ausgestattet ist, so daß das beschriebene Luftreinigungsgerät 1 in vorteilhafter Art und Weise eine Doppelfunktion - einmal als Luftreiniger und zum anderen als Beleuchtungseinrichtung - ausführt. Es ist aber auch möglich - wie anhand des zweiten Ausführungsbeispiels der Figur 2 dargestellt ist - anstelle des entsprechend gestalteten Strömungsleitelements 20 nur ein Beleuchtungselement 21' einzusetzen, wenn man bereit ist, auf die vorteilhaften Eigenschaften dieses Strömungsleitelements 20 zu verzichten.

Bei der vorstehenden Beschreibung wurde davon ausgegangen, daß die Einströmdüse 3 am oberen Ende der Säule und die Auslaßdüse 4 am unteren Ende desselben angeordnet ist. Es ist zwar prinzipiell auch möglich, die Anordnung der beiden Düsen 3 , 4 umzukehren, jedoch besitzt die beschriebene Anordnung den Vorteil, daß durch die Führung des zu reinigenden Luftstroms L von oben nach unten bevorzugt die im oberen Bereich des Raumes befindliche warme Luft angesaugt wird und durch das säulenartig ausgebildete Reinigungsgerät 1 nach unten geleitet wird, wo sie wieder beginnt aufzusteigen. Die hierdurch ausgebildete, von unten nach oben gerichtete Luftströmung vermindert in vorteilhafter Art und Weise die Sinkgeschwindigkeit der in der Luft befindlichen Partikel, insbesondere von schwereren Partikeln, so daß diese besser angesaugt und daher effizienter gereinigt werden können.

Abschließend zur Ausgestaltung des in Figur 1 beschriebenen ersten Ausführungsbeispiels ist noch anzuführen, daß im Bereich der Einströmdüse 3 ein nicht näher dargestelltes Grobsieb angeordnet werden kann. Außerdem ist es möglich, die Einströmöffnung 11 der Luftreinigungseinheit 10 mit einem entsprechenden Schutzgitter 17 zu versehen. Ein entsprechendes Schutzgitter 19 kann auch optional im Bereich der Auslaßdüse 4 angeordnet sein.

Die säulenartige Ausgestaltung des Gehäuses 2 des Luftreinigungsgeräts 1 besitzt desweiteren den Vorteil, daß es hierdurch leicht möglich ist, im Gehäuse 2 selbst die zum Betrieb des Luftreinigungsgeräts 1 erforderlichen, in der Figur 1 nicht dargestellten Einrichtungen unterzubringen, so daß diese von außen nicht sichtbar sind und derart den vorteilhaften ästhetischen Eindruck des Luftreinigungsgeräts 1 nicht beeinträchtigen. So kann z. B. ein Empfangselement einer Fernsteuerung im Gehäuse 2 integriert sein, die es erlaubt, das Luftreinigungsgerät 1 bequem zu bedienen.

Das in Figur 3 dargestellte Luftreinigungsgerät 1' entspricht in seinem prinzipiellen Aufbau dem in den Figuren 1 und 2 dargestellten Ausführungsbeispielen, so daß gleiche oder entsprechende Teile mit gleichen Bezugsziffern versehen werden können. Der wesentliche Unterschied zwischen diesen beiden Luftreinigungsgeräten 1,1' besteht darin, daß bei dem Luftreinigungsgerät 1' im Bereich der Austrittsdüse 4 eine Filtereinheit 30 angeordnet ist, welche z. B. als Aktivkohle-Filter und/oder als Ozon-Filter ausgebildet ist. Es kann auch vorgesehen sein, daß die Filtereinheit 30 ein Element zur Abgabe eines deodorierenden Duftstoffes aufweist.

Es soll noch aufgeführt werden, daß die beschriebene Ausgestaltung des Luftreinigungsgeräts 1, 1' mit nur einer einzigen Luftreinigungseinheit 10 nicht zwingend ist. Vielmehr ist es auch möglich, im Gehäuse 2 zwei oder mehrere Luftreinigungseinheiten anzuordnen, die dann vorzugsweise parallel zueinander angebracht sind. Es ist aber auch möglich, daß die Luftreinigungseinheit 10 spiralenförmig im Gehäuse 2 angeordnet ist, um einen in einem höheren Reinigungsgrad resultierenden längeren Luftweg durch die elektrostatische Luftreinigungseinheit 10 auszubilden. Es bedarf auch keiner weiteren Erwähnung, daß im Gehäuse 2 zwei oder mehrere spiralenförmig angeordnete Luftreinigungseinheiten 10 angeordnet sein können.

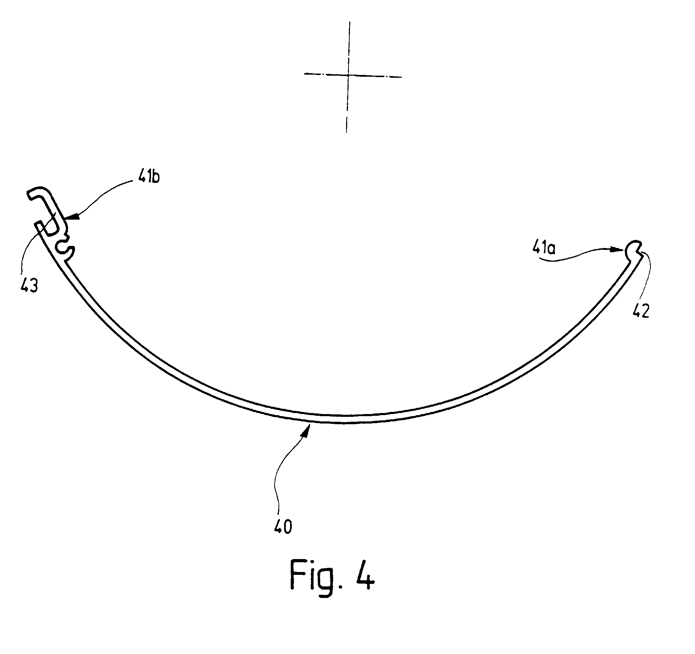

In Figur 4 ist nun ein Segment 40 dargestellt, welches in besonders vorteilhafter Art und Weise zur Ausbildung des Gehäuses 2 des beschriebenen Luftreinigungsgeräts 1, 1' geeignet ist. Der segmentartige Aufbau des Gehäuses 2 besitzt den Vorteil, daß es hierdurch besonders einfach möglich ist, die Luftreinigungseinheit 10 sowie die mit ihr zusammenwirkenden Einrichtungen vorab zu montieren und dann das Gehäuse 2 um die derart vorfabrizierte Baueinheit zu schließen. Jedes der mindestens zwei Segmente 40 des Gehäuses 2 weist an seinen beiden Längskanten Verbindungselemente 41a, 41b auf, durch die die beiden Segmente 40 zum Gehäuse 2 zusammensetzbar sind. Von Vorteil ist es hierbei, daß das erste Verbindungselement 41a als hakenartiger Vorsprung 42 ausgebildet ist, und daß sich daran anschließende Verbindungselement 41b des darauffolgenden Segments als ein komplementär zur Hakenform des ersten Verbindungselements 41a ausgebildetes, den hakenartigen Vorsprung umgreifendes Element 43 ausgebildet ist.

## Patentansprüche

1. Luftreinigungsgerät für Raumluft, insbesondere elektrostatisches Luftreinigungsgerät, das ein Gehäuse aufweist, in dem eine Einströmdüse (3) und eine Austrittsdüse (4) für einen zu reinigenden Luftstrom (L) vorgesehen sind, der einer im Gehäuse angeordneten Luftreinigungseinheit (10) zugeführt wird, daß das Gehäuse (2) des Luftreinigungsgeräts (1; 1') säulenartig ausgebildet ist, daß die im säulenartig ausgebildeten Gehäuse (2) aufgenommene Luftreinigungseinheit (10) rohrförmig ausgebildet ist, daß das säulenartig ausgebildete Gehäuse (2) eine im wesentlichen luftdicht geschlossene Mantelfläche (2a) aufweist, daß die Einströmdüse (3) für den zu reinigenden Luftstrom (L) an einer ersten Stirnfläche (2') des säulenartig ausgebildeten Gehäuses (2) angeordnet ist, dadurch gekennzeichnet, daß die Austrittsdüse (4) an der anderen Stirnfläche (2") des säulenartig ausgebildeten Gehäuses (2) angeordnet ist, daß eine Eintrittsöffnung (11) der Luftreinigungseinheit (10) an einer ihrer Stirnflächen (10') und fluchtend mit der Einströmdüse (3) des säulenartig ausgebildeten Gehäuses (2) und eine Austrittsöffnung (12 ) der Luftreinigungseinheit (10) an ihrer anderen Stirnfläche (10") und fluchtend mit der Austrittsdüse (4) des säulenartig ausgebildeten Gehäuses (2) der Luftreinigungsgeräts (1; 1') derart angeordnet sind, daß ein im wesentlichen geradliniger Verlauf des Luftstroms (L) zwischen der Einstromdüse (3) des Luftreinigungsgeräts (3) und der Eintrittsöffnung (11) sowie der Austrittsöffnung (12) und der Austrittsdüse (4) des säulenartig ausgebildeten Luftreinigungsgeräts (1,1') erzeugbar ist.

2. Luftreinigungsgerät nach Anspruch 1, dadurch gekennzeichnet, daß die Einströmdüse (3) in der oberen (2') der beiden Stirnflächen (2', 2") des säulenartig ausgebildeten Gehäuses (2) des Luftreinigungsgerätes (1;1') angeordnet ist.

3. Luftreinigungsgerät nach einem der Ansprüche 1 oder 2, dadurch gekennzeichnet, daß der die Eintrittsdüse (3) umgebende Randbereich (9) des säulenartig ausgebildeten Gehäuses (2) abgerundet ausgeführt ist.

4. Luftreinigungsgerät nach einem der Ansprüche 1 bis 3, dadurch gekennzeichnet, daß die Eintrittsöffnung (11) der Luftreinigungseinheit (10) in Strömungsrichtung des Luftstroms (L) beabstandet von der Einströmdüse (3) des Gehäuses (2) angeordnet ist.

5. Luftreinigungsgerät nach einem der Ansprüche 1 bis 4, dadurch gekennzeichnet, daß vor der Eintrittsöffnung (11) der Luftreinigungseinheit (10) ein Strömungsleitelement (20) angeordnet ist.

6. Luftreinigungsgerät nach einem der Ansprüche 1 bis 5, dadurch gekennzeichnet, daß in dem zwischen der Eintrittsdüse (3) und der Eintrittsöffnung (11) liegenden Bereich (5') des Gehäuses (2) ein Beleuchtungselement (21) angeordnet ist.

7. Luftreinigungsgerät nach einem der Ansprüche 1 bis 6, dadurch gekennzeichnet, daß zumindest zwischen der Einströmdüse (3) des Gehäuses (2) und der Eintrittsöffnung (11) der Luftreinigungseinheit (10) ein Schalldämmelement (15) angeordnet ist.

8. Luftreinigungsgerät nach einem der Ansprüche 1 bis 7, dadurch gekennzeichnet, daß zumindest zwischen der Austrittsdüse (4) des Gehäuses (2) und der Austrittsöffnung (12) der Luftreinigungseinheit (10) ein Schalldämmelement (16) angeordnet.

9. Luftreinigungsgerät nach einem der Ansprüche 1 bis 8, dadurch gekennzeichnet, daß vor der Austrittsdüse (4) des säulenartigen Gehäuses (2) eine Ventilatoreinheit (6) angeordnet ist.

10. Luftreinigungsgerät nach einem der vorangehenden Ansprüche, dadurch gekennzeichnet, daß die Austrittsöffnung (12) der Luftreinigungseinheit (10) in Strömungsrichtung beabstandet vor der Austrittsdüse (4) des säulenartig ausgebildeten Gehäuses (2) des Luftreinigungsgeräts (1;1') angeordnet ist.

11. Luftreinigungsgerät nach einem der Ansprüche 1 bis 10, dadurch gekennzeichnet, daß im Gehäuse (2) des Luftreinigungsgeräts (1') eine Filtereinrichtung (30) angeordnet ist.

12. Luftreinigungsgerät nach Anspruch 11, dadurch gekennzeichnet, daß die Filtereinrichtung (30) ein Aktivkohle-Filter und/oder ein Ozonfilter ist.

13. Luftreinigungsgerät nach einem der vorangehenden Ansprüche, dadurch gekennzeichnet, daß im Gehäuse (2) der Luftreinigungseinheit (1) ein Element zur Abgabe von Duftstoffen angeordnet ist.

14. Luftreinigungsgerät nach einem der Ansprüche 1 bis 13, dadurch gekennzeichnet, daß die Luftreinigungseinheit (10) als elektrostatische Luftreinigungseinheit ausgebildet ist.

15. Luftreinigungsgerät nach einem der vorangehenden Ansprüche, dadurch gekennzeichnet, daß das säulenartig ausgebildete Gehäuse (2) des Luftreinigungsgeräts (1,1') einen runden, ovalen oder polygonalen Querschnitt aufweist.

16. Luftreinigungsgerät nach einem der vorangehenden Ansprüche, dadurch gekennzeichnet, daß das säulenartig ausgebildete Gehäuse (2) des Luftreinigungsgeräts (1,1') auf einen Ständer aufsetzbar ist.

17. Luftreinigungsgerät nach einem der Ansprüche 1 bis 16, dadurch gekennzeichnet, daß am Gehäuse (2) des Luftreinigungsgeräts (1) Halteelemente angeordnet sind, durch die das Gehäuse (2) des Luftreinigungsgeräts (1;1') an einer Wand und/oder einer Decke eines Raumes, insbesondere eines Wohnraumes, befestigbar ist.

18. Luftreinigungsgerät nach einem der vorangehenden Ansprüche, dadurch gekennzeichnet, daß im Gehäuse (2) mindestens zwei Luftreinigungseinheiten (10) angeordnet sind.

## Claims

1. An air cleaning apparatus for indoor air, especially an electrostatic air-cleaning apparatus, which comprises a housing, in which an inlet nozzle (3) and an outlet nozzle (4) are provided for an air current (L) to be cleaned, which is led to an air cleaning unit (10) being arranged in said housing, wherein said housing (2) of said air cleaning apparatus (1; 1') is shaped column-like, wherein said air cleaning unit (10) included in the column-like shaped housing (2) is shaped column-like, wherein said column-like shaped housing (2) comprises an generally air-tight outer sheath (2a), wherein said inlet nozzle (3) for said air current (L) to be cleaned is provided in a first front face (2') of said column-like shaped housing (2), characterized in that the outlet nozzle (4) is provided in the other front face (2") of said column-like shaped housing (2), in that an inlet opening (11) of said air cleaning unit (10) is provided at one of its front faces (10') and is aligned with said inlet nozzle (3) of said column-like shaped housing (2), and that an outlet opening (12) of said air cleaning unit (10) is provided at its other front face (10") and is aligned with said outlet nozzle (4) of said column-like shaped housing (2) of said air cleaning apparatus (1; 1'), so that an essentially straight course of said air flow between said inlet nozzle (3) of said air cleaning apparatus (1) and said inlet opening (11) as well as between said outlet opening (12) and said outlet nozzle (4) of said column-like shaped air cleaning apparatus (1; 1') can be achieved.

2. The air cleaning apparatus according to claim 1, characterized in that said inlet nozzle (3) is provided in the upper one (2') of said two front faces (2'; 2") of said column-like shaped housing (2) of said air-cleaning apparatus (1; 1').

3. The air cleaning apparatus according to one of the claims 1 or 2, characterized in that a rim area (9) of said column-like shaped housing (2) surrounding said inlet nozzle (3) has a shape.

4. The air cleaning apparatus according to one of the claims 1-3, characterized in that said inlet opening (11) of said air cleaning unit (10) is spaced apart, in the flow direction of said air current (L), from said inlet nozzle (3) of said housing (2).

5. The air cleaning apparatus according to one of the claims 1-4, characterized in that a current guide element (20) is provided in front of said inlet opening (11) of said air cleaning unit (10).

6. The air cleaning apparatus according to one of the claims 1-5, characterized in that a lighting element (21) is provided in a space (5') of said housing (2) positioned between said inlet nozzle (3) and said inlet opening (11).

7. The air cleaning apparatus according to one of the claims 1-6, characterized in that a noise reduction element (15) is provided at least between said inlet nozzle (3) of said housing (2) and said inlet opening (11) of said air cleaning unit (10).

8. The air cleaning apparatus according to one of the claims 1-7, characterized in that a noise reduction element (16) is provided at least between said outlet nozzle (4) of said housing (2) and said outlet opening (12) of said air cleaning unit (10).

9. The air cleaning apparatus according to one of the claims 1-8, characterized in that a fan unit (6) is provided in front of said outlet nozzle (4) of said column-like housing (2).

10. The air cleaning apparatus according to one of the afore-mentioned claims, characterized in that said outlet opening (12) of said air cleaning unit (10) is spaced apart, in the flow direction, from said outlet nozzle (4) of said column-like shaped housing (2) of said air cleaning apparatus (1; 1').

11. The air cleaning apparatus according to one of the claims 1-10, characterized in that a filter unit (30) is provided in said housing (2) of said air cleaning apparatus (1').

12. The air cleaning apparatus according to claim 11, characterized in that said filter unit (30) is a carbon filter and/or an ozone filter.

13. The air cleaning apparatus according to one of the afore-mentioned claims, characterized in that an element for the release of a deodorizing substance is provided in said housing (2) of said air cleaning unit (1).

14. The air cleaning apparatus according to one of the claims 1-13, characterized in that said air cleaning unit (10) is an electrostatic air cleaning unit.

15. The air cleaning apparatus according to one of the afore-mentioned claims, characterized in that said column-like shaped housing (2) of said air cleaning apparatus (1; 1') has a circular, oval or polygonal cross-section.

16. The air cleaning apparatus according to one of the afore-mentioned claims, characterized in that said column-like shaped housing (2) of said air cleaning apparatus (1; 1') is mountable on a stand.

17. The air cleaning apparatus according to of the claims 1-16, characterized in that holding elements are provided on said housing (2) of said air cleaning apparatus (1), by which said housing (2) of said air cleaning apparatus (1; 1') is fixable to a wall and/or a ceiling of a room, especially of a living room.

18. The air cleaning apparatus according to one of the afore-mentioned claims, characterized in that at least two of said air cleaning units (10) are provided in said housing (2).

## Revendications

1. Épurateur d'air, en particulier un épurateur d'air électrostatique, qui comprend un boîtier, dans lequel sont prévues une tuyère d'admission (3) et une tuyère d'éjection (4) réservées à un flux d'air à épurer (L), qui est acheminé vers une unité d'épuration d'air (10) montée dans le boîtier (2), dispositif dans lequel le boîtier (2) de l'épurateur d'air (1 ; 1') est conçu en forme de colonne, l'unité d'épuration d'air (10) logée dans le boîtier en forme de colonne est conçue en forme de tube, le boîtier (2) en forme de colonne comporte une paroi latérale (2a) fermée, sensiblement étanche à l'air, la tuyère d'admission (3) réservée au flux d'air à épurer (L) est disposée sur une première face frontale (2') du boîtier (2) conçu en forme de colonne, caractérisé en ce que la tuyère d'éjection (4) est disposée sur l'autre face frontale (2") du boîtier (2) conçu en forme de colonne, en ce qu'un orifice d'entrée (11) de l'unité d'épuration d'air (10) est réalisé sur l'une des faces frontales (10') de celle-ci, en alignement avec la tuyère d'admission (3) du boîtier (2) en forme de colonne et un orifice de sortie (12) de l'unité d'épuration d'air (10) est réalisé sur l'autre face frontale (10") de celle-ci, en alignement avec la tuyère d'éjection (4) du boîtier (2) en forme de colonne de l'épurateur d'air (1 ; 1'), de manière à former tous deux un trajet sensiblement rectiligne du flux d'air (L) entre la tuyère d'admission (3) de l'épurateur d'air (1) et l'orifice d'entrée (11), ainsi que l'orifice de sertie (12) et la tuyère d'éjection (4) de l'épurateur d'air (1 ; 1') conçu en forme de colonne.

2. Épurateur d'air selon la revendication 1, caractérisé en ce que la tuyère d'admission (3) est disposée dans la face frontale supérieure (2') des deux faces frontales (2', 2") du boîtier (2), conçu en forme de colonne, de l'épurateur d'air (1 ; 1).

3. Épurateur d'air selon la revendication 1 ou 2, caractérisé en ce que le bord (9) du boîtier (2) conçu en forme de colonne, qui entoure la tuyère d'admission (3), est arrondi.

4. Épurateur d'air selon l'une quelconque des revendications 1 à 3, caractérisé en ce que l'orifice d'entrée (11) de l'unité d'épuration d'air (10) est disposé à une distance donnée de la tuyère d'admission (3) du boîtier (2) dans le sens de circulation du flux d'air (L).

5. Épurateur d'air selon l'une quelconque des revendications 1 à 4, caractérisé en ce qu'un élément de guidage du flux (20) est monté en amont de l'orifice d'entrée (11) de l'unité d'épuration d'air (10).

6. Épurateur d'air selon l'une quelconque des revendications 1 à 5, caractérisé en ce qu'un élément d'éclairage (21) est monté dans la partie (5') du boîtier (2), située entre la tuyère d'admission (3) et l'orifice d'entrée (11).

7. Épurateur d'air selon l'une quelconque des revendications 1 à 6, caractérisé en ce qu'un élément d'isolation acoustique (15) est monté au moins entre la tuyère d'admission (3) du boîtier (2) et l'orifice d'entrée (11) de l'unité d'épuration d'air (10).

8. Épurateur d'air selon l'une quelconque des revendications 1 à 7, caractérisé en ce qu'un élément d'isolation acoustique (16) est monté au moins entre la tuyère d'éjection (4) du boîtier (2) et l'orifice de sortie (12) de l'unité d'épuration d'air (10).

9. Épurateur d'air selon l'une quelconque des revendications 1 à 8, caractérisé en ce qu'une unité de ventilation (6) est montée en amont de la tuyère d'éjection (4) du boîtier (2) en forme de colonne.

10. Épurateur d'air selon l'une quelconque des revendications précédentes, caractérisé en ce que l'orifice de sortie (12) de l'unité d'épuration d'air (10) est réalisé à une distance donnée en amont de la tuyère d'éjection (4) du boîtier (2), conçu en forme de colonne, de l'épurateur d'air (1 ; 1').

11. Épurateur d'air selon l'une quelconque des revendications 1 à 10, caractérisé en ce qu'un dispositif de filtrage (30) est monté dans le boîtier (2) de l'épurateur d'air (1').

12. Épurateur d'air selon la revendication 11, caractérisé en ce que l'unité de filtrage (30) est un filtre à charbon actif et/ou un filtre à ozone.

13. Épurateur d'air selon l'une quelconque des revendications précédentes, caractérisé en ce qu'un élément d'émission de substances désodorisantes est monté dans le boîtier (2) de l'épurateur d'air (1).

14. Épurateur d'air selon l'une quelconque des revendications 1 à 13, caractérisé en ce que l'unité d'épuration d'air (10) est conçue en forme d'unité d'épuration d'air électrostatique.

15. Épurateur d'air selon l'une quelconque des revendications précédentes, caractérisé en ce que le boîtier (2), conçu en forme de colonne, de l'épurateur d'air (1, 1') présente une section ronde, ovale ou polygonale.

16. Épurateur d'air selon l'une quelconque des revendications précédentes, caractérisé en ce que le boîtier (2), conçu en forme de colonne, de l'épurateur d'air (1, 1') peut être posé sur un support.

17. Épurateur d'air selon l'une quelconque des revendications 1 à 16, caractérisé en ce que le boîtier (2) de l'épurateur d'air (1) est muni d'éléments de fixation, par lesquels le boîtier (2) de l'épurateur d'air (1 ; 1') peut être fixé contre un mur et/ou le plafond d'une pièce, en particulier une pièce d'habitation.

18. Épurateur d'air selon l'une quelconque des revendications précédentes, caractérisé en ce qu'au moins deux unités d'épuration d'air (10) sont montées dans le boîtier (2).
